# EUROPÄISCHE PATENTSCHRIFT

(11) **EP 1 224 407 B1**
(45) Veröffentlichungstag und Bekanntmachung des Hinweises auf die Patenterteilung: **02.12.2009**
(21) Anmeldenummer: 00972843.7
(22) Anmeldetag: 23.10.2000
(51) Int. Cl.: F16D 57/00, F16D 65/78

(54) **RETARDERSYSTEM**
RETARDER SYSTEM
SYSTEME RALENTISSEUR

(30) Priorität: 27.10.1999 DE 19951735
(43) Veröffentlichungstag der Anmeldung: 24.07.2002
(73) Patentinhaber: ZF FRIEDRICHSHAFEN Aktiengesellschaft, 88038 Friedrichshafen (DE)
(72) Erfinder: GAZYAKAN, Ünal, 88045 Friedrichshafen (DE); BAASCH, Detlef, 88048 Friedrichshafen (DE); ALTVATER, Roland, 88046 Friedrichshafen (DE)
(86) Internationale Anmeldenummer: PCT/EP2000/010410
(87) Internationale Veröffentlichungsnummer: WO 2001/031220

(56) Entgegenhaltungen:
- DE-A- 2 518 103
- DE-A- 3 430 456
- GB-A- 1 394 450
- SCHWAB M ET AL: "EIN INTEGRIERTER HYDRODYNAMISCHER RETARDER FUER DIE NEUE ECOSPLIT- GETRIEBEREIHE" ATZ AUTOMOBILTECHNISCHE ZEITSCHRIFT,DE,FRANCKH'SCHE VERLAGSHANDLUNG. STUTTGART, Bd. 95, Nr. 5, 1. Mai 1993 (1993-05-01), Seiten 250-255, XP000362811 ISSN: 0001-2785

## Beschreibung

Die Erfindung betrifft ein Retardersystem nach der in Patentanspruch 1 näher definierten Art.

Hydrodynamische Retarder sind beispielsweise aus der deutschen Veröffentlichung Dubbel, "Taschenbuch für den Maschinenbau", 18. Auflage, Seiten R49-R53 bekannt. Derartige Retarder werden durch Füllen und Entleeren eines beschaufelten Arbeitskreislaufes mit einem Betriebsfluid ein- oder ausgeschaltet.

Vor allem Nutzkraftfahrzeuge weisen einen hydrodynamischen Retarder mit einem Retarderkühlkreislauf auf. Dieser Retarderkühlkreislauf ist zwar separat von dem eigentlichen Getriebeölkreislauf ausgebildet, verwendet in der Regel jedoch das Getriebeöl aus dem Getriebesumpf als eigenes Betriebsfluid.

Häufig finden Retarder Verwendung als verschleißfreie Dauerbremsen, die mit einer Rotoreinheit versehen sind, die mit dem Getriebe des Fahrzeugs verbindbar ist und zum Abbremsen des Fahrzeugs die mechanische Energie des Getriebes in Wärmeenergie umwandelt und diese abführt. Es ist daher naheliegend, als Betriebsfluid des Retarders das Getriebeöl zu verwenden.

Beispielsweise aus der DE 197 51 776 A1 und der DE 196 46 598 A1 sind derartige hydrodynamische Retarder bekannt, bei denen der Rotor die mechanische Energie in die Energie einer Flüssigkeit umwandelt, die ihrerseits in der Rotoreinheit in Wärme umgesetzt wird, wodurch die gewünschte Bremskraft erzeugt wird.

Hydrodynamische Retarder können entweder zusätzlich an das abzubremsende Getriebe gekoppelt oder bereits in dieses integriert sein. Bei einer üblichen Anordnung des hydrodynamischen Retarders ist dieser in einem Getriebe, vorzugsweise von Nutzkraftfahrzeugen, integriert und von einer Getriebeantriebswelle angetrieben, wobei, wie bereits erwähnt, das Betriebsfluid Öl aus einem Getriebesumpf darstellt, welcher gleichzeitig einen separaten Getriebeölkreislauf speist.

Ein Retarder ist in seiner Konstruktion und Funktionsweise mit einem hydrodynamischen Wandler vergleichbar, der in umgekehrter Arbeitsrichtung eingesetzt wird. Die bekannten hydrodynamischen Retarder sind üblicherweise mit einer Rotoreinheit und einer Statoreinheit ausgebildet, wobei die Rotoreinheit mit einer Rotorwelle und einem Rotorschaufelrad ausgebildet ist, welches mit einem Statorschaufelrad zusammenarbeitet, das zu dem Rotorschaufelrad beabstandet angeordnet ist.

Die Rotoreinheit des Retarders ist hierbei mit der Abtriebswelle des Getriebes verbunden, während die Statoreinheit fest an einem Retarder- oder Getriebegehäuse angeordnet ist. Das zwischen Rotorschaufelrad und Statorschaufelrad befindliche Betriebsfluid wird infolge der Beaufschlagung mit einem Drehmoment von der Rotoreinheit ähnlich wie bei einer Pumpe angetrieben und zirkuliert so in dem Arbeitskreislauf des Retarders. Das dabei dem Betriebsfluid abverlangte Moment wird herangezogen, um das Getriebe abzubremsen, wobei stets eine gewisse Differenzdrehzahl aufrechterhalten werden muß.

Die infolge der Verzögerung bzw. der Abbremsung des Rotors vernichtete kinetische Energie führt zu einer Erwärmung des Getriebeöls. Um eine Überhitzung des Retarders beziehungsweise des Öles zu verhindern, muß das erwärmte Getriebeöl beim Durchlaufen eines Kühlers in entsprechender Weise abgekühlt werden.

Zum Abführen der Wärme, welche im Retarder erzeugt wird, ist üblicherweise ein Retarderkühlkreislauf vorgesehen, welcher den Retarder mit seiner Statoreinheit und Rotoreinheit und den Kühler umfaßt. Im aktivierten Zustand des Retarders ist dieser Retarderkühlkreislauf als eigentlicher Arbeitskreislauf des Retarders geschlossen, wobei über ein Regelventil und eine Retarderpumpe Betriebsfluid nachgeführt wird, welches durch innere Leckage verloren geht, um den Füllstand im System aufrechtzuerhalten. In einem deaktivierten Zustand des Retarders wird das Getriebeöl von der Retarderpumpe in Abhängigkeit der Getriebedrehzahl und somit der Geschwindigkeit des Fahrzeugs und unter Umgehung der Rotor- und Statoreinheit des Retarders durch den Kühler gefördert und anschließend in den Getriebesumpf zurückgeführt. Der Kühler in dem Kühlkreislauf des Retarders ist ein an sich bekannter Wärmetauscher, der mit einem Kühlwassersystem des Motors in Verbindung stehen kann.

Bei einer geringen Fahrzeuggeschwindigkeit wird eine entsprechend geringere Menge an Getriebeöl durch den Wärmetauscher geleitet. Da der Grad der Kühlleistung im wesentlichen von der Durchflußmenge abhängt, ist die Kühlung des Getriebeöls bei derartigen Fällen eher ineffektiv, und der Kühler zeichnet sich durch einen schlechten Wirkungsgrad aus.

Darüber hinaus sind in gewissen Fahrsituationen bestimmte Lastzustände gegeben, die einen erhöhten Durchfluß an Getriebeöl durch den Kühler benötigen. Zu nennen ist hier eine solche Fahrsituation, bei der eine hohe Arbeitsleistung bei gleichzeitig geringer Geschwindigkeit auftritt, wie dies beispielsweise bei einer Bergfahrt eines Nutzkraftfahrzeugs unter Vollast der Fall ist. Problematisch ist dabei, daß in Abhängigkeit der geringen Fahrzeuggeschwindigkeit die Getriebepumpe dem Kühler nur eine entsprechend geringe Menge an Getriebeöl zur Verfügung stellt, die für diesen Lastfall benötigte Kühlleistung jedoch nur durch eine beträchtlich größere Menge an Getriebeöl bewerkstelligt werden kann. Der Wirkungsgrad des Kühlers ist auch für diesen Fall niedrig.

Schließlich ist aus der gattungsgemäßen ATZ Automobiltechnische Zeitschrift (95, 1993, Mai, No. 5) "Ein integrierter hydrodynamischer Retarder für die neue Ecosplit-Getriebereihe" ein Retardersystem bei Kraftfahrzeugen, insbesondere Nutzkraftfahrzeugen bekannt, aus einem Retarderkühlkreislauf, der einen Retarder, einen Kühler, der mit einem Motorkühlsystem in Verbindung steht, eine Retarderpumpe zur Entnahme von Getriebeöl aus einem Getriebesumpf, ein Regelventil zur Regulierung der von dem Retarder unter Ausbildung einer erforderlichen Bremsleistung benötigten Menge des Getriebeöls als Betriebsfluid, und ein Umschaltventil aufweist, das in einer Stellung, in welcher der Retarder nicht bremsaktiviert ist, die Retarderpumpe mit dem Kühler derart verbindet, dass das Getriebeöl aus dem Getriebesumpf über den Kühler in den Getriebesumpf zurückgeführt wird, ohne den Retarder zu durchlaufen, und das in einer anderen Stellung, in welcher der Retarder bremsaktiviert ist, den Kühler mit dem Retarder unter Ausbildung eines geschlossenen Arbeitskreislaufes verbindet.

Der vorliegenden Erfindung liegt die Aufgabe zugrunde, ein Retardersystem zu schaffen, bei dem mit einfachen Mitteln die Durchflußmenge eines Getriebeöls durch einen Kühler eines Retarders optional,für bestimmte auftretende Fahrzustände zu Zwecken einer besseren Kühlleistung erhöhbar ist.

Erfindungsgemäß wird diese Aufgabe mit einem Retardersystem gemäß den Merkmalen des Patentanspruches 1 gelöst.

Grundsätzlich ist der Wärmetauscher des Retarderkühlkreislaufes für ein Vielfaches der von der Retarderpumpe bereitstellbaren Fördermenge an Getriebeöl ausgelegt, wie dies beispielsweise für den Bremszustand des Retarders, d.h. in seinem geschlossenen Arbeitskreislauf, stets der Fall sein muß. Folglich kann jederzeit eine über die normalerweise in Abhängigkeit der vorherrschenden Geschwindigkeit durch den Kühler fließende Menge hinausgehende Getriebeölmenge von diesem ohne weiteres aufgenommen werden.

Gemäß der Erfindung läßt sich so die Durchflußmenge optional erhöhen, ohne daß diese ausschließlich von der aktuellen Geschwindigkeit des Fahrzeugs abhängt. Dies ist erfindungsgemäß sowohl für eine geringe Geschwindigkeit des Fahrzeugs unter Normallast als auch unter Voll- bzw. Überlast, wie z.B. bei einer Bergfahrt, möglich.

Die mit einer erhöhten Durchflußmenge einhergehende bessere Kühlleistung senkt die maximal auftretende Temperatur des Getriebeöls während des Kühlvorgangs, wodurch sich die Lebensdauer dieses Betriebsfluids entscheidend verlängert. Darüber hinaus erhöht sich der Wirkungsgrad des zum Einsatz kommenden Wärmetauschers. Mit einem insgesamt besseren Kühlverhalten ist auch eine spätere Rückregelung des Retarders verbunden.

Weitere Vorteile und Weiterbildungen der Erfindung ergeben sich aus den Unteransprüchen und aus den nachfolgend anhand der Zeichnung prinzipmäßig beschriebenen Ausführungsbeispielen.

Es zeigt
- Fig.1: eine schematische Ansicht eines erfindungsge- mäßen Retardersystems, welches mit einem Ge- triebeölkreislauf verbindbar ist; und
- Fig.2: eine schematische Ansicht einer Retarderpumpe gemäß der Erfindung.

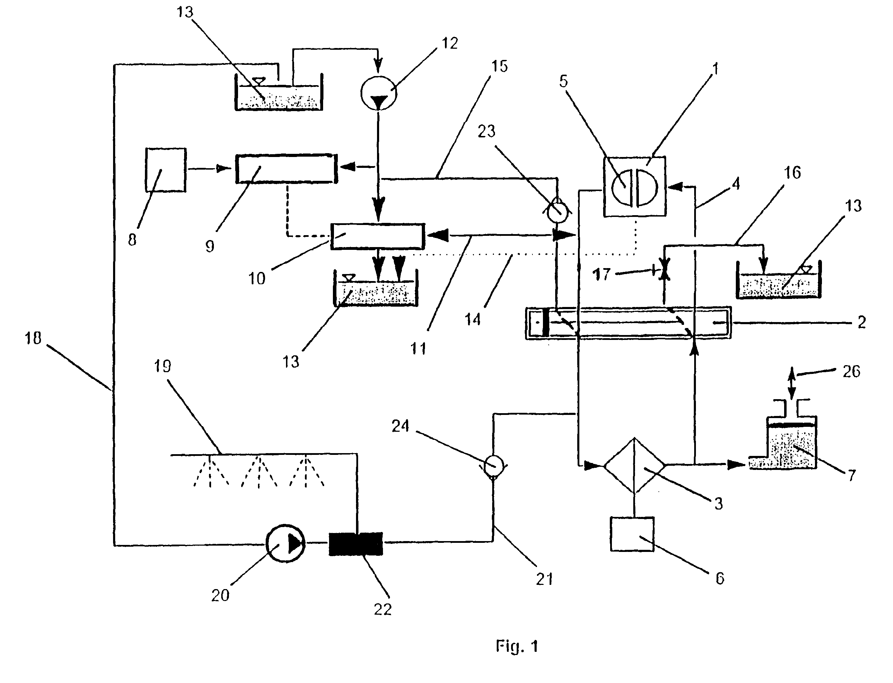

Bezug nehmend auf die Fig. 1 ist schematisch ein Retarder 1 mit den zugehörigen Kreisläufen dargestellt, welcher in ein nicht näher dargestelltes Getriebe eines Nutzkraftfahrzeuges integriert ist.

Der Retarder 1 ist im bremsaktivierten Zustand, d.h. bei einer Verzögerungseinwirkung auf das Getriebe, über ein Umschaltventil 2 mit einem einen Wärmetauscher darstellenden Kühler 3 verbunden, wobei sich ein geschlossener Arbeitskreislauf bzw. Retarderkühlkreislauf 4 ausbildet. In diesem Arbeitskreislauf 4 zirkuliert das Getriebeöl als Betriebsfluid infolge des von einem Rotor 5 des Retarders 1 beim Abbremsen des Getriebes aufgebrachten Moments. In dem Kühler 3, der mit einem symbolisch dargestellten Motorkühlsystem 6 in Verbindung steht, wird das von dem Retarder 1 erhitzte Getriebeöl abgekühlt, indem die Wärme an ein Motorkühlwasser abgegeben wird.

Im nicht bremsaktivierten Zustand ist der Retarder 1 von dem Getriebeöl entleert. Um anlaufen zu können, wird eine bestimmte Startmenge an Getriebeöl benötigt, die von einem Ölspeicher 7 kurzfristig zur Verfügung gestellt wird, nachdem das Umschaltventil 2 den Arbeitskreislauf 4 schließt. Bei Aktivierung des Retarders 1 wird der Ölspeicher 7 von dem Fahrer mittels einer hier nur angedeutet dargestellten Druckluftvorrichtung 26 betätigt, wobei die erforderliche Startmenge an Getriebeöl in den Arbeitskreislauf 4 gepumpt wird, so daß der Retarder 1 anlaufen kann.

Die Bremsleistung des Retarders 1 hängt im wesentlichen von der in dem Retarder 1 bzw. in dem Arbeitskreislauf 4 zur Verfügung stehenden Menge an Getriebeöl ab. Die Bremsleistung wird über eine Bremsstufenwahl 8 mit einer Stufenregelung von dem Fahrer gewählt. Hierzu ist ein mit der Bremsstufenwahl 8 verbundenes Steuerventil 9 vorgesehen, das wiederum auf ein Regelventil 10 einwirkt. Dieses Regelventil 10 steht einerseits über eine Speiseleitung 11 mit dem Arbeitskreislauf 4 und andererseits über eine Retarderpumpe 12 mit einem Getriebesumpf 13 in Verbindung. Die einer gewählten Bremsstufe und somit einer bestimmten Bremsleistung entsprechenden Menge an Getriebeöl wird von der Retarderpumpe 12 aus dem Getriebesumpf 13 gefördert und über das Regelventil 10 dem Arbeitskreislauf 4 zugeführt. Die Retarderpumpe 12 ist mit dem Abtrieb des Getriebes verbunden, so daß die Förderarbeit in Abhängigkeit der Drehzahl des Getriebes und damit der Geschwindigkeit des Nutzkraftfahrzeugs erfolgt.

Die Retarderpumpe 12 und das Regelventil 10 führen während des Bremsbetriebs des Retarders 1 dem Arbeitskreislauf 4 stets eine gewisse Ölmenge zu, um die beim Retarder 1 auftretenden und über innere Leckage( bildlich dargestellt durch Leitung 14) in den Getriebesumpf 13 zurückgeführten Leckageverluste auszugleichen.

Im nicht bremsaktivierten Zustand des Retarders 1 ist das Umschaltventil 2, wie dies in Fig. 1 die gestrichelten Linien schematisch darstellen, so geschaltet, daß der Kühler 3 über eine Zufuhrleitung 15 direkt mit der Retarderpumpe 12 und dem Getriebesumpf 13 in Verbindung steht. Nach dem Kühler 3 wird das von der Retarderpumpe 12 geförderte Getriebeöl über die Abfuhrleitung 16 wieder in den Getriebesumpf 13 zurückgeführt. Die Abfuhrleitung 16 weist ein Druckhalteventil 17 auf, um gegenüber dem Kühler 3 zu Zwekken einer einwandfreien Funktion einen gewissen Gegendruck aufrechtzuerhalten.

Von dem Getriebesumpf 13 zweigt des weiteren ein Getriebeölkreislauf 18 ab, durch den Getriebeöl zu einer symbolisch dargestellten Getriebeschmiervorrichtung 19 gelangt. Die für die Schmierung des Getriebes notwendige Menge an Getriebeöl wird von einer Getriebepumpe 20 in der Art an sich bekannter Ölförderpumpen bereitgestellt. Die Getriebepumpe 20 arbeitet im Normalbetrieb in Abhängigkeit der Drehzahl des Getriebes.

Gemäß der Erfindung ist eine Verbindung 21 von dem Getriebeölkreislauf 18 zu dem Retarderkühlkreislauf 4 vorgesehen, so daß zusätzlich zur der von der Retarderpumpe 12 geförderten Menge weiteres Getriebeöl aus dem Getriebeölkreislauf 18 dem Kühler 3 unter Erhöhung der Kühlleistung zugeführt werden kann. Da der Retarder 1 nicht bremsaktiviert ist, befindet sich der Retarderkühlkreislauf 4 hierbei in einer geöffneten Stellung, d.h. der Retarder 1 wird umgangen.

Die Abzweigung der für die Getriebeschmierung notwendigen Menge an Getriebeöl einerseits und die Weiterleitung zusätzlichen Getriebeöls an den Retarderkühlkreislauf 4 andererseits wird gemäß der Erfindung von einem Verteilerblock 22 sichergestellt, welcher mehrere Ventile herkömmlicher Bauart aufweisen kann. Der Verteilerblock 22 bzw. dessen Ventile sind elektronisch ansteuerbar, wobei deren Öffnungsverhalten in Abhängigkeit der Getriebeöltemperatur und des Getriebelastzustandes erfolgt.

Die Verbindung 21 ebenso wie die Zufuhrleitung 15 des Retarderkühlkreislaufes 4 weisen Rückschlagventile 23 bzw. 24 auf, die einen Rücklauf in einer zur vorgesehenen Förderrichtung des Getriebeöls entgegengesetzten Richtung verhindern.

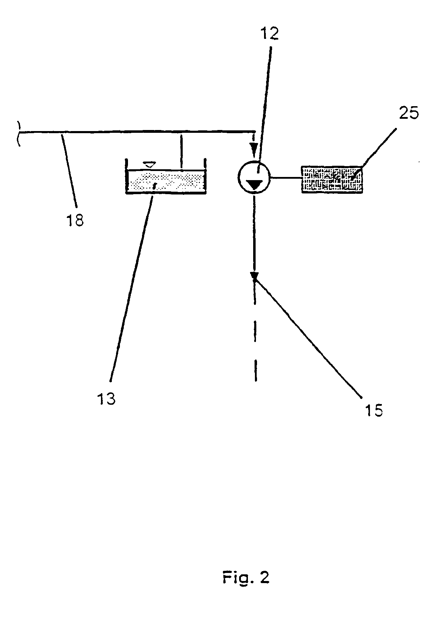

Fig. 2 zeigt schematisch und lediglich als Ausschnitt eine weitere Ausführungsform der Erfindung.

Die gewünschte Erhöhung der Durchflußmenge an Getriebeöl durch den Kühler 3 läßt sich ebenfalls durch eine Kopplung der Retarderpumpe 12 mit einem zu dem Getriebe externen, üblicherweise elektrischen, Antriebsmotor 25 bewerkstelligen, welcher vorzugsweise elektronisch ansteuerbar ist. Die Retarderpumpe 12, die ansonsten abtriebsdrehzahlabhängig an das Getriebe gekoppelt ist, wird gemäß der Erfindung von diesem entkoppelt und von dem Elektromotor 25 angetrieben, so daß unabhängig von der Abtriebsgetriebedrehzahl eine insgesamt höhere Förderleistung erzielbar ist. Das so aus dem Getriebesumpf 13 geförderte Getriebeöl wird über die Zufuhrleitung 15 und das Umschaltventil 2 dem Kühler 3 und von diesem über die Abfuhrleitung 16 und das Druckhalteventil 17 wieder dem Getriebesumpf 13 zugeführt, stets unter Umgehung des Retarders 1.

Selbstverständlich lassen sich beide Ausführungsformen der Erfindung, d.h. die Verbindung 21 des Getriebeölkreislaufs 18 mit dem Retarderkühlkreislauf 4 und die Kopplung der Retarderpumpe 12 mit dem zusätzlichen Antriebsmotor 25 in einem Gesamtsystem vereinen.

Idealerweise ist die Steuerung bzw. Regelung der Getriebepumpe 20, des Verteilerblocks 22 bzw. der darin enthaltenen Ventile sowie der Retarderpumpe 12 mit dem Antriebsmotor 25 mit einer elektronischen Getriebesteuerung verbunden und parameterabhängig, insbesondere last- und/oder temperaturabhängig ausgelegt.

### Bezugszeichen

- 1: Retarder
- 2: Umschaltventil
- 3: Kühler, Wärmetauscher
- 4: Arbeitskreislauf, Retarderkühlkreislauf
- 5: Rotor
- 6: Motorkühlsystem
- 7: Ölspeicher
- 8: Bremsstufenwahl
- 9: Steuerventil
- 10: Regelventil
- 11: Speiseleitung
- 12: Retarderpumpe
- 13: Getriebesumpf
- 14: Leckageleitung (schematisch)
- 15: Zufuhrleitung
- 16: Abfuhrleitung
- 17: Druckhalteventil
- 18: Getriebeölkreislauf
- 19: Getriebeschmiervorrichtung
- 20: Getriebepumpe
- 21: Verbindung
- 22: Verteilerblock
- 23: Rückschlagventil
- 24: Rückschlagventil
- 25: Antriebsmotor, Elektromotor
- 26: Druckluftvorrichtung

## Patentansprüche

1. Retardersystem bei Kraftfahrzeugen, insbesondere Nutzkraftfahrzeugen, bestehend aus einem Retarderkühlkreislauf (4), der einen Retarder (1), einen Kühler (3), der mit einem Motorkühlsystem (6) in Verbindung steht, eine Retarderpumpe (12) zur Entnahme von Getriebeöl aus einem Getriebesumpf (13), mindestens ein Steuerventil (9) und/oder ein Regelventil (10) zur Regulierung der von dem Retarder (1) unter Ausbildung einer erforderlichen Bremsleistung benötigten Menge des Getriebeöls als Betriebsfluid, und ein Umschaltventil (2) aufweist, das in einer Stellung, in welcher der Retarder (1) nicht bremsaktiviert ist, die Retarderpumpe (12) mit dem Kühler (3) derart verbindet, dass das Getriebeöl aus dem Getriebesumpf (13) über den Kühler (3) in den Getriebesumpf (13) zurückgeführt wird, ohne den Retarder (1) zu durchlaufen, und das in einer anderen Stellung, in welcher der Retarder (1) bremsaktiviert ist, den Kühler (3) mit dem Retarder (1) unter Ausbildung eines geschlossenen Arbeitskreislaufes (4) verbindet, **dadurch gekennzeichnet, dass** ein Getriebeölkreislauf (18) zur Getriebeschmierung, der eine Getriebepumpe (20) zur Förderung eines Getriebeöls aus dem Getriebesumpf (13) zu Bauteilen eines Getriebes aufweist, eine derartige Verbindung (21) zu dem Retarderkühlkreislauf (4) aufweist, dass im nicht bremsaktivierten Zustand des Retarders (1) zur Erhöhung des Getriebeöldurchflusses durch den Kühler (3) Getriebeöl aus dem Getriebeölkreislauf (18) abzweigbar ist.

2. Retardersystem nach Anspruch 1, **dadurch gekennzeichnet, dass** der Getriebeölkreislauf (18) einen Verteilerblock (22) aufweist, der die Getriebeölzuführung zu dem Getriebe einerseits und zu dem Kühler (3) andererseits regelt.

3. Retardersystem nach Anspruch 2, **dadurch gekennzeichnet, dass** der Verteilerblock (22) parameterabhängig, insbesondere last- und/oder temperaturabhängig und/oder geschwindigkeitsabhängig elektronisch ansteuerbar ist.

4. Retardersystem nach einem der vorhergehenden Ansprüche, **dadurch gekennzeichnet, dass** die Verbindung (21) zu dem Retarderkühlkreislauf (4) entgegen der Förderrichtung der Getriebepumpe (20) und der Retarderkühlkreislauf (4) entgegen der Förderrichtung der Retarderpumpe (12) Rückschlagventile (23,24) aufweisen.

5. Retardersystem nach einem der Ansprüche 1 bis 4, **dadurch gekennzeichnet, dass** die Retarderpumpe (12) mit einem Antriebsmotor (25) gekoppelt ist, so dass diese unabhängig von der Fahrzeuggeschwindigkeit ansteuerbar ist.

6. Retardersystem nach Anspruch 5, **dadurch gekennzeichnet, dass** der Antriebsmotor ein Elektromotor (25) ist.

## Claims

1. Retarder system in motor vehicles, in particular commercial motor vehicles, consisting of a retarder cooling circuit (4) which has a retarder (1), a cooler (3) which is connected to an engine cooling system (6), a retarder pump (12) for the extraction of transmission oil from a transmission sump (13), at least one control valve (9) and/or one regulating valve (10) for regulating the quantity of transmission oil, as operating fluid, needed by the retarder (1) in order to generate a required braking power, and a change-over valve (2) which, in a position in which the retarder (1) is not brake-activated, connects the retarder pump (12) to the cooler (3) in such a way that the transmission oil from the transmission sump (13) is recirculated via the cooler (3) into the transmission sump (13), without running through the retarder (1), and which, in another position in which the retarder (1) is brake-activated, connects the cooler (3) to the retarder (1) so as to form a closed operating circuit (4), **characterized in that** a transmission-oil circuit (18) for transmission lubrication, which has a transmission pump (20) for conveying a transmission oil from the transmission sump (13) to components of a transmission, has a connection (21) to the retarder cooling circuit (4) such that, when the retarder (1) is not in the brake-activated state, transmission oil can be branched off from the transmission-oil circuit (18) in order to increase the throughflow of transmission oil through the cooler (3).

2. Retarder system according to Claim 1, **characterized in that** the transmission-oil circuit (18) has a distributor block (22) which regulates the supply of transmission oil to the transmission, on the one hand, and to the cooler (3), on the other hand.

3. Retarder system according to Claim 2, **characterized in that** the distributor block (22) can be activated electronically as a function of parameters, in particular as a function of load and/or temperature and/or as a function of speed.

4. Retarder system according to one of the preceding claims, **characterized in that** the connection (21) to the retarder cooling circuit (4), opposite to the conveying direction of the transmission pump (20), and the retarder cooling circuit (4), opposite to the conveying direction of the retarder pump (12), have non-return valves (23, 24).

5. Retarder system according to one of Claims 1 to 4, **characterized in that** the retarder pump (12) is coupled to a drive motor (25), so that the said retarder pump can be activated independently of the vehicle speed.

6. Retarder system according to Claim 5, **characterized in that** the drive motor is an electric motor (25).

## Revendications

1. Système ralentisseur pour véhicules automobiles, notamment pour véhicules utilitaires, constitué d'un circuit de refroidissement de ralentisseur (4) qui présente un ralentisseur (1), un radiateur (3) qui est en liaison avec un système de refroidissement du moteur (6), une pompe de ralentisseur (12) pour prélever de l'huile de boîte de vitesses d'un carter de boîte de vitesses (13), au moins une soupape de commande (9) et/ou une soupape de régulation (10) pour la régulation de la quantité d'huile de boîte de vitesses en tant que fluide de boîte de vitesses requise par le ralentisseur (1) pour créer une puissance de freinage nécessaire, et une soupape d'inversion (2) qui, dans une position dans laquelle le ralentisseur (1) n'est pas activé par les freins, relie la pompe du ralentisseur (12) au radiateur (3) de telle sorte que l'huile de boîte de vitesses provenant du carter de boîte de vitesses (13) soit recirculée par le biais du radiateur (3) dans le carter de boîte de vitesses (13), sans passer par le ralentisseur (1), et qui, dans une autre position dans laquelle le ralentisseur (1) est activé par les freins, relie le radiateur (3) au ralentisseur (1) en créant un circuit de travail fermé (4), **caractérisé en ce qu'**un circuit d'huile de boîte de vitesses (18) pour la lubrification de la boîte de vitesses, qui présente une pompe de boîte de vitesses (20) pour refouler une huile de boîte de vitesses hors du carter de boîte de vitesses (13) vers des composants d'une boîte de vitesses, présente une liaison (21) au circuit de refroidissement du ralentisseur (4) telle que dans l'état non activé par les freins du ralentisseur (1), pour augmenter le débit d'huile de boîte de vitesses à travers le radiateur (3), de l'huile de boîte de vitesses peut être prélevée hors du circuit d'huile de boîte de vitesses (18).

2. Système de ralentisseur selon la revendication 1, **caractérisé en ce que** le circuit d'huile de boîte de vitesses (18) présente un bloc distributeur (22) qui régule l'alimentation en huile de boîte de vitesses à la boîte de vitesses d'une part et au radiateur (3) d'autre part.

3. Système de ralentisseur selon la revendication 2, **caractérisé en ce que** le bloc distributeur (22) peut être commandé électroniquement en fonction de paramètres, notamment en fonction de la charge et/ou de la température et/ou en fonction de la vitesse.

4. Système de ralentisseur selon l'une quelconque des revendications précédentes, **caractérisé en ce que** la liaison (21) au circuit de refroidissement du ralentisseur (4) et le circuit de refroidissement du ralentisseur (4) présentent des soupapes de non retour (23, 24) dans le sens opposé au sens de refoulement de la pompe de boîte de vitesses (20) et au sens de refoulement de la pompe du ralentisseur (12), respectivement.

5. Système de ralentisseur selon l'une quelconque des revendications 1 à 4, **caractérisé en ce que** la pompe du ralentisseur (12) est accouplée à un moteur d'entraînement (25), de sorte que celui-ci puisse être commandé indépendamment de la vitesse du véhicule.

6. Système de ralentisseur selon la revendication 5, **caractérisé en ce que** le moteur d'entraînement est un moteur électrique (25).
